# EUROPEAN PATENT APPLICATION

(11) **EP 4 484 612 A1**
(43) Date of publication of application: **01.01.2025**
(21) Application number: 22928481.5
(22) Date of filing: 23.02.2022
(51) Int. Cl.: C25B 1/04, C25B 9/015

(54) **DEVICE FOR GENERATING HYDROGEN GAS AND OXYGEN GAS FROM WATER, AND SYSTEM FOR THE SAME PURPOSE, WHICH INCLUDES THE DEVICE**

(71) Applicant: Hydris Ecotech, S.L., 46005 Valencia (ES)
(72) Inventor: RUZ MARTÍNEZ, Jose, 46005 VALENCIA (ES); HUET GRONDONA, Fernando, 46005 VALENCIA (ES); GONZÁLEZ RUZ, Alfredo, 46005 VALENCIA (ES)
(74) Representative: Capitán García, Maria Nuria
(86) International application number: PCT/ES2022/070095
(87) International publication number: WO 2023/161535

(57) **Abstract**

Device for generating hydrogen gas and oxygen gas from water, comprising a case, which forms a hydrolysis chamber designed to contain an amount of water; electrode means that act as a cathode and an anode; and gas-separating means, disposed in the hydrolysis chamber between the cathode and the anode, which comprise a permeable membrane segment suitable for preventing the generated hydrogen gas and oxygen gas from passing through the permeable membrane segment and mixing together, the hydrolysis chamber being divided into a first portion that contains the cathode and a second portion that contains the anode, wherein the first and second chamber portions are in fluid communication with respective pipes for hydrogen gas and oxygen gas. Another object of the invention is a system for the same purpose, comprising at least one device as described above.

## Description

### TECHNICAL FIELD OF THE INVENTION

The present invention is encompassed within the field of devices and systems used, fundamentally, for the generation of hydrogen gas, for example, for use of the latter as fuel. In particular, it relates to an alkaline reactor, as well as a system that includes at least one device or reactor, used to generate hydrogen gas and oxygen gas from the electrolysis of water.

### BACKGROUND OF THE INVENTION

As is known, our society is largely dependent on highly polluting fuels, which have led us to the current environmental problems. Therefore, among the nonpolluting fuels that are being used to replace current polluting fuels, is hydrogen gas. Currently, about 95 % of hydrogen is produced from natural gas, and the rest by electrolysis of water, an abundant resource found in nature.

Various devices and systems that generate hydrogen gas and oxygen gas from the dissociation of water molecules are known. These devices are fundamentally based on a hydrolysis chamber made up of a cavity, which contains an amount of water (to which it is common to add an electrolyte, such as sulphuric acid, sodium hydroxide or potassium hydroxide, to increase the efficiency of electrolysis), and respective electrode means that act as a cathode and an anode respectively, which are spaced apart, disposed in contact with the water contained in the hydrolysis chamber. By means of a continuous electric current, supplied either by a power supply or a battery, which is connected through the electrodes (anode and cathode) to the water, the decomposition of the water into oxygen (02) and hydrogen (H2) gases is achieved. The gases produced by electrolysis are collected in the upper part of the hydrolysis chamber, and are then passed through gas-separating means that, as the name indicates, seek to separate said gases before being stored in separate tanks.

The present invention seeks to propose an alternative solution to known oxyhydrogen gas (HHO) generation devices and systems. In addition to very low power consumption for the various functions, it is effective, efficient, safe and sustainable.

### DESCRIPTION OF THE INVENTION

The present invention is established and characterised in the independent claims, while the dependent claims describe other characteristics thereof.

An object of the invention is a device for generating hydrogen gas and oxygen gas from water, comprising:
- a case, which forms a hydrolysis chamber designed to contain an amount of water,
- respective electrode means that act as a cathode and an anode, spaced apart and disposed in contact with the water contained in the hydrolysis chamber, so that, in use, the cathode and the anode are configured to dissociate the water contained in the hydrolysis chamber into hydrogen gas and oxygen gas respectively,
- gas-separating means, designed to separate the hydrogen gas and the oxygen gas generated by the cathode and the anode in the hydrolysis chamber, and
- a hydrogen gas pipe, an oxygen gas pipe and a replacement water pipe in communication with the hydrolysis chamber.

Where, the gas-separating means are disposed in the hydrolysis chamber between the cathode and the anode, and comprise a permeable membrane segment suitable for preventing the generated hydrogen and oxygen gases from passing through said permeable membrane segment and mixing together, so that the gas-separating means divides the hydrolysis chamber into a first chamber portion that contains the cathode and a second chamber portion that contains the anode, where, the first chamber portion is in fluid communication with the hydrogen gas pipe and the second chamber portion is in fluid communication with the oxygen gas pipe.

Also the object of the present invention is a system for generating hydrogen gas and oxygen gas from water, which comprises:
- at least one device like that described above,
- a power supply, connected to a first voltage input port of a cathode and to a second voltage input port of an anode of electrode means of the device, and
- pressure storage means for hydrogen gas and oxygen gas comprising a hydrogen tank and an oxygen tank disposed downstream of a hydrogen gas pipe and an oxygen gas pipe of the device respectively.

Where, a first upper end of the hydrogen tank is connected to the hydrogen gas pipe and a second upper end of the oxygen tank is connected to the oxygen gas pipe, and a first lower end of the hydrogen tank is connected to a second lower end of the oxygen tank by means of a first connection pipe, so that the hydrogen tank and the oxygen tank share an amount of water suitable for transferring from one of the tanks to the other, through the first connection pipe, and varying a storage volume of hydrogen gas above a third level of water in the hydrogen tank in relation to a storage volume of oxygen gas above a fourth level of water in the oxygen tank, and vice versa, depending of a combination of actuations of solenoid valves disposed in the hydrogen gas pipe, in the oxygen gas pipe and in the first connection pipe respectively.

Thus, a device and a system are achieved for the generation of hydrogen gas and oxygen gas from water with a high electrochemical compression capacity for fuel and oxidiser, intended for the storage of energy in the form of compressed gases and other uses.

### BRIEF DESCRIPTION OF THE FIGURES

The present specification is complemented by a set of figures which illustrate a preferred example, and which in no way limit the invention.
Figure 1 depicts an exploded perspective view of the device for generating hydrogen gas and oxygen gas from water.
Figure 2 depicts a schematic front view of the device of Figure 1.
Figure 3 depicts an enlarged, sectional schematic view of water replacement means of the device of Figure 1.
Figure 4 depicts a schematic view of the system for generating hydrogen gas and oxygen gas from water, which includes the device of Figure 1.
Figure 5 depicts a schematic view of a second embodiment of the system of Figure 4, which includes a plurality of devices like that of Figure 1 connected in series.

### DETAILED EXPLANATION OF THE INVENTION

The present invention is a device for generating hydrogen gas and oxygen gas from water.

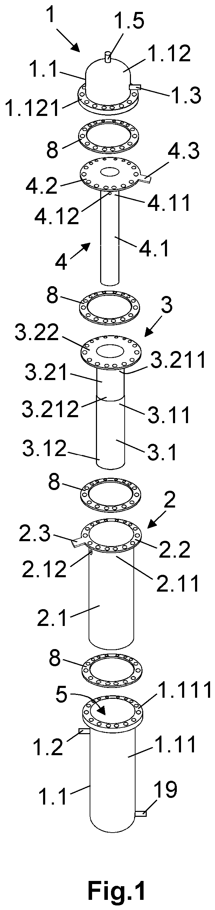

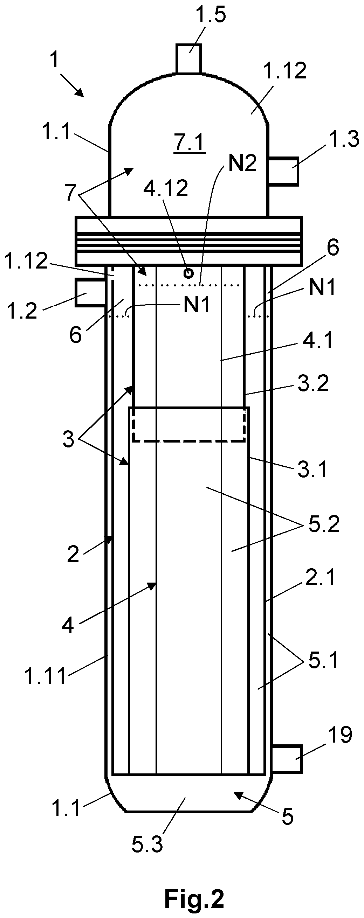

As shown in Figures 1 and 2, the device (1) comprises a case (1.1), which forms a hydrolysis chamber (5) designed to contain an amount of water, to which an electrolyte, such as, sulphuric acid, sodium hydroxide or potassium hydroxide, could be added to increase the effectiveness of the electrolysis to be created within the hydrolysis chamber (5).

The device (1) further comprises respective electrode means that act as a cathode (2) and as an anode (4), which are spaced apart and disposed in contact with the water contained in the hydrolysis chamber (5), so that, in use, the cathode (2) and the anode (4) are configured to dissociate the water contained in the hydrolysis chamber (5) into hydrogen gas and oxygen gas respectively.

Additionally, the device (1) comprises a hydrogen gas pipe (1.2) and an oxygen gas pipe (1.3) in communication with the hydrolysis chamber (5), as well as a replacement water pipe (1.5), likewise in communication with the hydrolysis chamber (5).

Preferably, the cathode (2) comprises a first tubular element (2.1) of stainless steel with a first upper end (2.11) fixed concentrically to a first fastening ring (2.2) of stainless steel.

A "fastening ring" is understood to mean a hollow discshaped body fixed to one of the ends of a tubular element, so that it is used as a flange or fixing edge of said tubular element.

Additionally, it is preferred that the first upper end (2.11) of the first tubular element (2.1) comprises at least one first through hole (2.12), which allows the passage of the hydrogen gas generated from one side of the wall to the other of the first tubular element (2.1), on the way towards the hydrogen gas pipe (1.2).

Likewise, it is preferred that a first voltage input port (2.3) is fixed to the first fastening ring (2.2).

For its part, it is preferred that the anode (4) comprises a second tubular element (4.1) of stainless steel with a second upper end (4.11) fixed concentrically to a second fastening ring (4.2) of stainless steel.

In the same way as for the cathode (2), it is preferred that the second upper end (4.11) of the second tubular element (4.1) comprises at least a second through hole (4.12), which allows the passage of the oxygen gas generated from one side of the wall to the other of the second tubular element (4.1), on the way towards the oxygen gas pipe (1.3).

Preferably, a second voltage input port (4.3) is fixed to the second fastening ring (4.2).

Likewise, the device (1) comprises gas-separating means (3), which are designed to separate the hydrogen gas and the oxygen gas generated by the cathode (2) and the anode (4) in the hydrolysis chamber. (5).

As shown in Figure 2, the gas-separating means (3) are disposed in the hydrolysis chamber (5) between the cathode (2) and the anode (4), and comprise a permeable membrane segment (3.1) suitable for preventing the generated hydrogen and oxygen gases from passing through said permeable membrane segment (3.1) and mixing together. In other words, the permeable membrane segment (3.1) allows the passage of electrons, but not the passage of the generated hydrogen and oxygen gases, preventing said gases from mixing together.

In this way, the gas-separating means (3) divide the hydrolysis chamber (5) into a first chamber portion (5.1) that contains the cathode (2), where the hydrogen gas is generated, and a second chamber portion (5.2) that contains the anode (4), where the oxygen gas is generated.

Likewise, the first chamber portion (5.1) is in fluid communication with the hydrogen gas pipe (1.2) and the second chamber portion (5.2) is in fluid communication with the oxygen gas pipe (1.3), so that, as the hydrogen gas is generated along the cathode (2), it is conveyed through the first chamber portion (5.1) in the direction of the hydrogen gas pipe (1.2), and in the same way, the oxygen gas generated along the anode (4) is conveyed through the second chamber portion (5.2) in the direction of the oxygen gas pipe (1.3).

Thus, the hydrogen and oxygen gases have a greater volume to disperse and separate quickly from the corresponding electrode medium, either the cathode (2) or the anode (4), resulting in an immediate rise of said gases, in the direction to the corresponding hydrogen gas (1.2) and oxygen gas (1.3) pipes, through the permeable membrane segment (3.1), without mixing together.

As shown in Figure 1, it is preferred that the gas-separating means (3) comprise a dielectric separating segment (3.2) fixed to the permeable membrane segment (3.1) .

As shown in Figure 2, the dielectric separating segment (3.2) forms a first gas accumulation chamber (6) between a first level of water (N1) contained in the hydrolysis chamber (5), corresponding to the first chamber portion (5.1), and the hydrogen gas pipe (1.2), and a second gas accumulation chamber (7) between a second level of water (N2) contained in the hydrolysis chamber (5), corresponding to the second chamber portion (5.2), and the oxygen gas pipe (1.3). Where, a difference between the first and the second level of water (N1, N2) contained in the hydrolysis chamber (5) corresponds to a difference in the accumulation of hydrogen gas and oxygen gas in the first and second gas accumulation chamber (6, 7) respectively.

Thus, the hydrogen gas, generated by the cathode (2), is never in contact with the oxygen gas, generated by the anode (4), since the hydrogen gas accumulates in the first gas accumulation chamber (6), between the dielectric separating segment (3.2) and the cathode (2), and the oxygen gas accumulates in the second gas accumulation chamber (7), between the dielectric separating segment (3.2) and the anode (4). Both fillings of the gas accumulation chambers (6, 7) generate downward pressure, that is, towards the first and second level of water (N1, N2) contained in the hydrolysis chamber (5) respectively, and said pressure is exerted on the gases (hydrogen and oxygen), and the vertical rise of said gases to the respective gas accumulation chambers (6, 7) is carried out quickly, without horizontal displacement thereof towards the permeable membrane segment (3.1) to attempt to pass through it.

The pressures of the gases that are created in both gas accumulation chambers (6, 7) are those that are used for the pressure extraction of said gases through the respective hydrogen gas (1.2) and oxygen gas pipes (1.3) for separate storage. For example, the hydrogen gas pipe (1.2) and the oxygen gas pipe (1.3) could each comprise respective flow regulation means, for example, solenoid valves (14), where, by closing the solenoid valve (14) of the oxygen gas pipe (1.3) and opening the solenoid valve (14) of the hydrogen gas pipe (1.2), the pressure in the second gas accumulation chamber (7) is increased, precisely by accumulation of oxygen gas therein, which pushes down the second level of water (N2) in the hydrolysis chamber (5), while the first level of water (N1) in said hydrolysis chamber (5) rises and pushes the hydrogen gas accumulated in the first gas accumulation chamber (6), which exits the device (1) through the hydrogen gas pipe (1.2). The opposite happens when we close the solenoid valve (14) of the hydrogen gas pipe (1.2) and open the solenoid valve (14) of the oxygen gas pipe (1.3), that is, the first level of water (N1) of the hydrolysis chamber (5) is pushed down, by the increase in the pressure of the hydrogen gas in the first gas accumulation chamber (6), while the second level of water (N2) in said hydrolysis chamber (5) rises, pushing the oxygen gas accumulated in the second gas accumulation chamber (7), which exits the device (1) through the oxygen gas pipe (1.3).

Thus, an efficient device (1) is achieved for generating hydrogen gas and oxygen gas with high compression power, designed to separate water molecules into the two gases that compose it, hydrogen and oxygen, to compress them directly in separate chambers (6, 7) without the help of an additional compressor.

Preferably, as shown in Figure 1, the dielectric separating segment (3.2) of the gas-separating means (3) comprises a third tubular element (3.21) of stainless steel with an upper end (3.211) fixed concentrically to a third fastening ring (3.22) of stainless steel. Preferably, the third tubular element (3.21) and the third fastening ring (3.22) are coated with a material that is resistant to alkaline substances, has high thermal resistance, is resistant to high pressures and is electrically insulating, for example, any epoxy resin, in particular, it is preferred that it be an epoxy-vinyl ester resin; or, any enamel with similar characteristics. With the arrangement of the dielectric separating segment (3.2) between the cathode (2) and the anode (4), a nonreactive zone is formed between said elements (2, 4) that is advantageously used to form the gas accumulation chambers (6, 7).

For its part, it is preferred that the permeable membrane segment (3.1) of the gas-separating means (3), wherein the reactive zone for electrolysis is formed, in the form of a cylindrical sleeve, and that an upper end (3.11) of the permeable membrane segment (3.1) is hermetically fixed to a lower end (3.212) of the third tubular element (3.21) of the dielectric separating segment (3.2). Likewise, it is preferred that the permeable membrane segment (3.1) be open at its lower end (3.12), at the bottom (5.3) of the hydrolysis chamber (5) where there is no electrolysis reaction, with a view to being able to compensate the first and second levels of water (electrolyte) (N1, N2) between the first and second chamber portions (5.1, 5.2) of said hydrolysis chamber (5), thus avoiding overpressures that lead to a push of gases (hydrogen or oxygen) against the permeable membrane segment (3.1).

Preferably, the permeable membrane segment (3.1) of the gas-separating means (3) is made of a woven, porous, microperforated material, or its chemical composition allows the passage of electrons through it (i.e., that its chemical composition has naturally porosity), for example, selected from the group consisting of polypropylene, sulfonated copolymer-fluoropolymer based on tetrafluoroethylene, polyacrylonitrile, meta-aramid, polyamide, elastane, polyphenylene sulphide (PPS), polytetrafluoroethylene (PTFE) and fibreglass, or any combination thereof. Or, any substance with the same technical characteristics, that is, with chemical resistance to corrosion produced by alkaline and/or acidic substances, with the ability to allow the passage of electrical charges, and not permeable to hydrogen and oxygen atoms.

The permeability of the gases on the membrane requires exerting great pressure for the gases to pass through it, which occurs in both directions, that is, from the side of the permeable membrane segment (3.1) wherein the hydrogen gas is generated towards the other side of said permeable membrane segment (3.1) wherein the oxygen gas is generated, and vice versa, thus, it is very unlikely that, the gases having storage capacity superiorly in the first and second gas accumulation chambers (6 , 7) and being at the same pressures on both sides of the permeable membrane segment (3.1), said gases pass through the permeable membrane segment (3.1) and become mixed, since the surface tension on both sides of said permeable membrane segment (3.1), because it is submerged in water, is very high, and further, there is no possibility of a pressure decompensation that motivates the gases to clash and pass through the permeable membrane segment (3.1), thus, the gases have no choice but to slide over the permeable membrane segment (3.1) and rise in the direction of the first and second gas accumulation chambers (6, 7).

On the other hand, it is preferred that the first tubular element (2.1) has a larger diameter than the third tubular element (3.21), and that in turn, the third tubular element (3.21) has a larger diameter than the second tubular element (4.1), so that, as shown in Figure 2, the second tubular element (4.1) is configured to be disposed inside the set formed by the third tubular element (3.21) of the dielectric separating segment (3.2) and the permeable membrane segment (3.1), with the second fastening ring (4.2) coupled onto the third fastening ring (3.22); and in turn, the set of the third tubular element (3.21) of the dielectric separating segment (3.2) and the permeable membrane segment (3.1) is configured to be disposed inside the first tubular element (2.1), with the third fastening ring (3.22) coupled onto the first fastening ring (2.2).

In the same way, it is preferred that, in turn, the first tubular element (2.1), with the rest of the elements (4.1, 3.21, 3.1, 4.2) disposed inside it, is configured to be disposed inside a container body (1.11) of the case (1.1), with the first fastening ring (2.2) coupled onto an upper flange (1.111) of the container body (1.11).

Additionally, it is preferred that a lower flange (1,121) of a cover body (1.12) of the case (1.1) is configured to couple onto the second fastening ring (4.2), to materialise the closure of the case (1.1) of the device (1) .

Preferably, between the lower flange (1.121), the second fastening ring (4.2), the third fastening ring (3.22), the first fastening ring (2.2) and the upper flange (1.111), respective sealing gaskets (8) are disposed. Additionally, it is preferred that fixing means (not shown in the figures) are configured to pass through the lower flange (1.121), the second fastening ring (4.2), the third fastening ring (3.22), the first fastening ring (2.2), the upper flange (1.111) and the sealing gaskets (8), and thus, hermetically close the case (1.1) of the device (1).

On the other hand, as shown in Figure 2, it is preferred that the cover body (1.12) of the case (1.1) forms a cavity (7.1), which forms part of the second gas accumulation chamber (7). Preferably, the oxygen gas pipe (1.3) is coupled to the cavity (7.1).

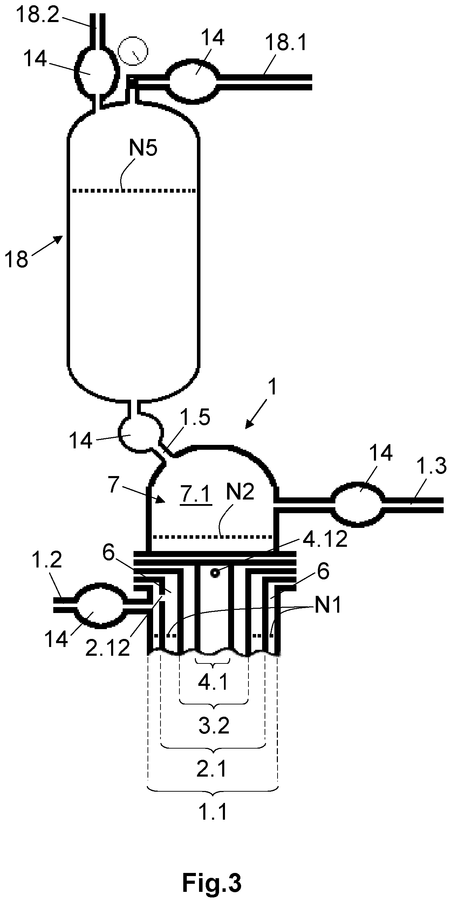

Likewise, the replacement water pipe (1.5) could be coupled to the cavity (7.1), for example, as shown in Figure 3, coming from a replacement water tank (18) disposed above the cavity (7.1) and includes a mains water inlet (18.1) and a gas outlet (18.2). The flow through the replacement water pipe (1.5), as well as the mains water inlet (18.1) and the gas outlet (18.2) can be regulated through respective solenoid valves (14), as an example of possible flow regulation means that could be used. For example, it could be implemented that the amount of water in the hydrolysis chamber (5) is checked with conductivity measurements, carried out by a voltage sensor (not shown in the figures), so that, when the water inside the hydrolysis chamber (5) is below a required level detected by the voltage sensor, the conductivity is 0 Volt, and that reading of that 0 Volt leads to the entry of water through the replacement water pipe (1.5), with a view to compensating the amount of water required within the hydrolysis chamber (5).

By actuating or opening the solenoid valve (14) of the mains water inlet (18.1), as well as the one that regulates the gas outlet (18.2) to bring the interior of the replacement water tank (18) to atmospheric pressure, it is possible to fill said tank (18) with mains water, and then, by closing said solenoid valves (14) of the mains water inlet (18.1) and the gas outlet (18.2), and actuating the solenoid valve (14) corresponding to the replacement water pipe (1.5), the water contained in the replacement water tank (18) is poured by gravity into the cavity (7.1) on the way towards the hydrolysis chamber (5), in exchange for counteracting the volume of oxygen gas coming from the second gas accumulation chamber (7), specifically, from the cavity (7.1), which passes through the volume of water contained in the replacement water tank (18) and accumulates above a fifth level (N5) of water in said replacement water tank (18).

For its part, the replacement water poured into the cavity (7.1), which is part of the second gas accumulation chamber (7), flows into the second chamber portion (5.2) of the hydrolysis chamber (5), and passes through the bottom (5.3) of said hydrolysis chamber (5) (where there is no electrolysis since the cathode (2) and the anode (4) do not reach) towards the first portion of the chamber (5.1).

Thus, it is possible to self-fill the hydrolysis chamber (5) while operating at high pressures, in a simple and safe manner, avoiding the use of complex and expensive mechanical elements, such as high-pressure injection pumps or compressors.

Also the object of the invention is a system for generating hydrogen gas and oxygen gas from water.

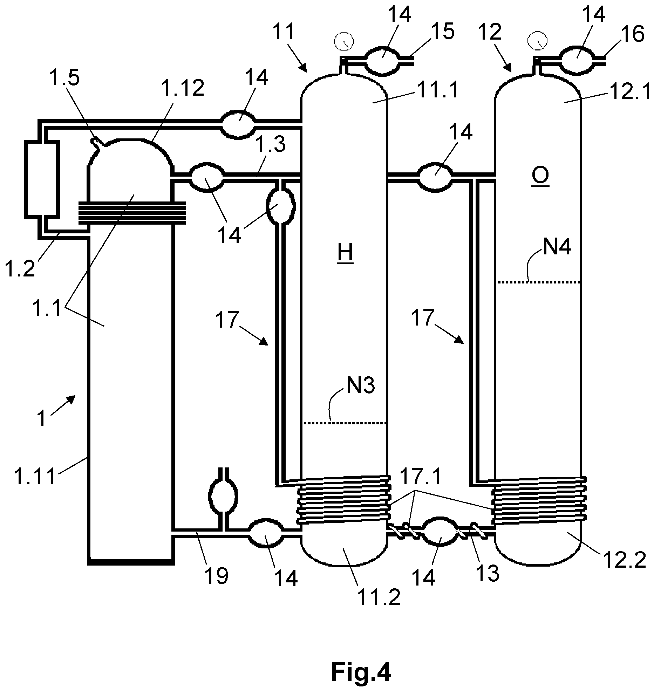

As shown in Figure 4, the system comprises:
- at least one device (1) like that described above,
- a power supply (not shown in the figures), connected to the first voltage input port (2.3) of the cathode (2) and to the second voltage input port (4.3) of the anode (4) of the electrode means of the device (1), and
- pressure storage means for hydrogen gas and oxygen gas comprising a hydrogen tank (11) and an oxygen tank (12) disposed downstream of the hydrogen gas pipe (1.2) and the oxygen gas pipe (1.3) of the device (1) respectively.

A first upper end (11.1) of the hydrogen tank (11) is connected to the hydrogen gas pipe (1.2) and a second upper end (12.1) of the oxygen tank (12) is connected to the oxygen gas pipe (1.3), and a first lower end (11.2) of the hydrogen tank (11) is connected to a second lower end (12.2) of the oxygen tank (12) by means of a first connection pipe (13), so that the hydrogen tank (11) and the oxygen tank (12) share an amount of water suitable for transferring from one of the tanks (11, 12) to the other, through the first connection pipe (13), and varying a storage volume of hydrogen gas (H) above a third level of water (N3) in the hydrogen tank (11) in relation to a storage volume of oxygen gas (O) above a fourth level of water (N4) in the oxygen tank (12), and vice versa, depending on a combination of actuations of the solenoid valves (14) disposed in the hydrogen gas pipe (1.2) and in the oxygen gas pipe (1.3), as well as, another solenoid valve (14), as possible flow regulation means, disposed in the first connection pipe (13).

In other words, the solenoid valves (14) of the hydrogen gas pipe (1.2), the oxygen gas pipe (1.3) and the first connection pipe (13) are responsible for regulating the extraction of the hydrogen and oxygen gases generated in the device (1), as well as its storage independently in the hydrogen (11) and oxygen tanks (12).

For example, starting from a high second level of water (N2) in the hydrolysis chamber (5), which implies little accumulation of oxygen gas in the second gas accumulation chamber (7) and a large accumulation of hydrogen gas in the first gas accumulation chamber (6), with the solenoid valve (14) of the oxygen gas pipe (1.3) closed or not actuated and the solenoid valve (14) of the hydrogen gas pipe (1.2) actuated or open, the accumulation of oxygen gas begins to increase in the second gas accumulation chamber (7), causing the second level of water (N2) to decrease, which leads to the first level of water (N1) of the hydrolysis chamber (5) to rise and push the hydrogen gas contained in the first gas accumulation chamber (6) so that it exits the device (1) through the hydrogen gas pipe (1.2) in the direction of the hydrogen tank (11), where it accumulates and exerts pressure on the third level of water (N3) contained in said hydrogen tank (11). Likewise, by actuating the solenoid valve (14) of the first connection pipe (13), there is a decrease in the third level of water (N3), and with it, a rise in the fourth level of water (N4) in the oxygen tank (12), which leads to a decrease in volume and an increase in pressure of the oxygen gas stored in said oxygen tank (12). Once the desired decrease of the second level of water (N2) in the hydrolysis chamber (5) has been achieved, the solenoid valve (14) of the first connection pipe (13) is closed and the solenoid valve (14) of the oxygen gas pipe (1.3) is opened, maintaining the first and second levels of water (N1, N2) reached in the hydrolysis chamber (5) until the next time said first and second levels of water (N1, N2) need to be adjusted.

The same thing happens if starting from a high first level of water (N1) in the hydrolysis chamber (5), which implies little accumulation of hydrogen gas in the first gas accumulation chamber (6) and a large accumulation of oxygen gas in the second gas accumulation chamber (7), in this case, with the solenoid valve (14) of the hydrogen gas pipe (1.2) not actuated and the solenoid valve (14) of the oxygen gas pipe (1.3) actuated, the accumulation of hydrogen gas begins to increase in the first gas accumulation chamber (6), causing the first level of water (N1) to decrease, which leads to the second level of water (N2) of the hydrolysis chamber (5) to rise and push the oxygen gas contained in the second gas accumulation chamber (7) so that it exits the device (1) through the oxygen gas pipe (1.3) in the direction of the oxygen tank (12), where, it accumulates and exerts pressure on the fourth level of water (N4) contained in said oxygen tank (12). Likewise, by actuating the solenoid valve (14) of the first connection pipe (13), there is a decrease in the fourth level of water (N4), and with it, a rise in the third level of water (N3) in the hydrogen tank (11), which leads to a decrease in volume and an increase in pressure of the hydrogen gas stored in said hydrogen tank (11). Once the desired decrease of the first level of water (N1) in the hydrolysis chamber (5) has been achieved, the solenoid valve (14) of the first connection pipe (13) is closed and the solenoid valve (14) of the hydrogen gas pipe (1.2) is opened, maintaining the first and second level of waters (N1, N2) reached in the hydrolysis chamber (5) until said first and second level of waters (N1, N2) need to be adjusted again.

To control the previously described adjustments of the first and second level of waters (N1, N2) in the hydrolysis chamber (5) of the device (1), it is preferred that both in the first gas accumulation chamber (6) and in the second gas accumulation chamber (7), respective sensor means are disposed (not shown in the figures) that warn of having reached a high first or second level of water (N1, N2) in the first gas accumulation chamber (6) or in the second gas accumulation chamber (7) respectively, and with this, a controller (not shown in the figures) can command the actuation, or not, of the solenoid valves (14) of the hydrogen gas pipe (1.2), of the oxygen gas pipe (1.3) and of the first connection pipe (13) accordingly. Likewise, the controller is configured to command the rest of the functionalities described, both of the device (1) and the system, interacting with the corresponding solenoid valves (14) and/or sensor means.

On the other hand, it is preferred that the first upper end (11.1) of the hydrogen tank (11) comprises a hydrogen gas outlet pipe (15) and the second upper end (12.1) of the oxygen tank (12) comprises a oxygen gas outlet pipe (16), where, likewise, the hydrogen gas and oxygen gas outlet pipes (15, 16) comprise respective solenoid valves (14), through which, in the same way, the delivery of the gases stored in the tanks (11, 12) is regulated for use when required.

It must be taken into account that the generation of hydrogen gas is not only double the generation of oxygen gas, but also that hydrogen gas has a different compressibility factor than oxygen gas, so it is not possible to know what volume said gases will occupy in their respective tanks (11, 12), and the system needs to be efficient for when one of the two gases stored in said tanks (11, 12) is to be extracted to cover the needs of use. As has been seen, in the system proposed here, the pressure exerted by each gas inside the hydrogen tank (11) and the oxygen tank (12) does not matter, the volume of water shared between them is incompressible, and if water is transferred from one of said tanks (11, 12) to another, the losses generated by the extraction of any of said gases for use, either from the hydrogen tank (11) or from the oxygen tank (12) are compensated.

Additionally, it is preferred that the storage means, that is, the hydrogen and oxygen tanks (11, 12) are in communication with the hydrolysis chamber (5) of the device (1), for example, through their respective lower parts, by means of a second connection pipe (19), where, in the same way, the flow through said second connection pipe (19) can be regulated by a solenoid valve (14) as possible flow regulation means, for example, so that, in the event of an emergency, it is necessary to empty the hydrolysis chamber (5), passing the water contained therein to the tanks (11, 12).

Likewise, in locations with cold climates, in order to avoid freezing of the pressure storage means for hydrogen gas and oxygen gas, it is preferred that, between the device (1) and the oxygen tank (12), there is disposed a heating loop (17) connected in parallel to the oxygen gas pipe (1.3), where the heating loop (17) forms a coil (17.1) that surrounds the first lower end (11.2) of the hydrogen tank (11), to the first connection pipe (13) and to the second lower end (12.2) of the oxygen tank (12), and respective solenoid valves (14), as possible flow regulation means, are disposed in the heating loop (17) and in the oxygen gas pipe (1.3), so that said solenoid valves (14) regulate a diversion of the oxygen gas through the heating loop (17).

In this way, it is about taking advantage of the temperature of the gases, particularly, the oxygen gas coming from the device (1), which comes out hot and can be accompanied by traces of steam, which can be used to create a thermal shield in strategic elements or zones of said elements of the system, such as the first lower end (11.2) of the hydrogen tank (11), the first connection pipe (13) and the second lower end (12.2) of the oxygen tank (12) that contain water.

By commanding the solenoid valve (14) of the heating loop (17) and the second solenoid valve (14) of the oxygen gas pipe (1.3), so that the solenoid valve (14) of the heating loop (17) opens and said second solenoid valve (14) of the oxygen gas pipe (1.3) closes, the oxygen gas coming from the device (1) on its way to the oxygen tank (12) is circulated, through the coil (17.1), creating a thermal shield that protects the first lower end (11.2) of the hydrogen tank (11), the first connection pipe (13) and the second lower end (12.2) of the oxygen tank (12) from the cold, that is, from freezing. Downstream of the coil (17.1), the heating loop (17) returns the oxygen gas to the oxygen gas pipe (1.3), at a point thereof disposed downstream of its second solenoid valve (14) which remains closed, just before delivering said gas to the oxygen tank (12) for storage. If the implementation of the thermal shield is not necessary, the solenoid valve (14) of the heating loop (17) is simply closed and the second solenoid valve (14) of the oxygen gas pipe (1.3) is opened, thus eliminating the bypass of the oxygen gas through the heating loop (17), the oxygen gas being delivered directly to the oxygen tank (12) passing along the oxygen gas pipe (1.3).

In the same way, the implementation of a thermal shield for the replacement water tank (18) could be foreseen.

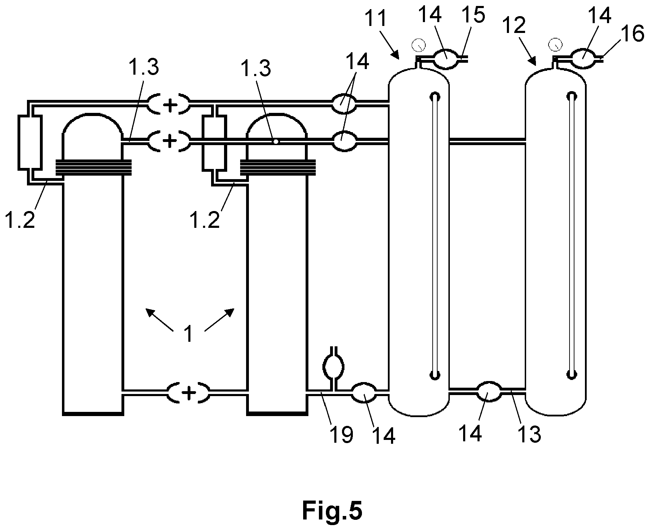

As shown in Figure 5, the system could include a set of devices (1), that is, more than one, disposed in series. For example, the devices (1) that make up the system could be powered by a garden of photovoltaic solar panels (not shown in the figures) as power supply, connected in series or in parallel with the devices (1), where, at most, said devices (1) receive approximately 24 volts, depending on the time of day, so it is not required that all devices (1) of the system work at all times, it will depend on the power delivered by the photovoltaic solar panel garden at each moment of the day. The same happens if there is a leak or breakdown in any of the devices (1) of the system, where the delivery of power to said faulty device (1) is cancelled, and the power delivered by the photovoltaic solar panel garden is distributed between the rest of the devices (1) of the system.

## Claims

1. -Device (1) for generating hydrogen gas and oxygen gas from water, comprising:
- a case (1.1) forming a hydrolysis chamber (5) designed to contain an amount of water,
- respective electrode means that act as a cathode (2) and as an anode (4), spaced apart and disposed in contact with the water contained in the hydrolysis chamber (5), so that, in use, the cathode (2) and the anode (4) are configured to dissociate the water contained in the hydrolysis chamber (5) in hydrogen gas and oxygen gas respectively,
- gas-separating means (3), designed to separate the hydrogen gas and the oxygen gas generated by the cathode (2) and the anode (4) in the hydrolysis chamber (5),
- a hydrogen gas pipe (1.2) and an oxygen gas pipe (1.3) in communication with the hydrolysis chamber (5), and
- a replacement water pipe (1.5), in communication with the hydrolysis chamber (5),
**characterised in that** the gas-separating means (3) are disposed in the hydrolysis chamber (5) between the cathode (2) and the anode (4), and comprise a permeable membrane segment (3.1) suitable for preventing the generated hydrogen and oxygen gases from passing through said permeable membrane segment (3.1) and mixing together, so that the gas-separating means (3) divide the hydrolysis chamber (5) into a first chamber portion (5.1) that contains the cathode (2) and a second chamber portion (5.2) that contains the anode (4), where the first chamber portion (5.1) is in fluid communication with the hydrogen gas pipe (1.2) and the second chamber portion ( 5.2) is in fluid communication with the oxygen gas pipe (1.3).

2. -Device according to claim 1, wherein the cathode (2) comprises a first tubular element (2.1) of stainless steel with a first upper end (2.11) fixed concentrically to a first fastening ring (2.2) of stainless steel, where, the first upper end (2.11) of the first tubular element (2.1) comprises at least a first through hole (2.12), and a first voltage input port (2.3) is fixed to the first fastening ring (2.2).

3. -Device according to claim 1, wherein the anode (4) comprises a second tubular element (4.1) of stainless steel with a second upper end (4.11) fixed concentrically to a second fastening ring (4.2) of stainless steel, where, the second upper end (4.11) of the second tubular element (4.1) comprises at least a second through hole (4.12), and a second voltage input port (4.3) is fixed to the second fastening ring (4.2).

4. -Device according to claim 1, wherein the gas-separating means (3) comprise a dielectric separating segment (3.2) fixed to the permeable membrane segment (3.1), so that the dielectric separating segment (3.2) forms a first gas accumulation chamber (6) between a first level of water (N1) contained in the hydrolysis chamber (5) and the hydrogen gas pipe (1.2), and a second gas accumulation chamber (7) between a second level of water (N2) contained in the hydrolysis chamber (5) and the oxygen gas pipe (1.3).

5. -Device according to claim 4, wherein the dielectric separating segment (3.2) of the gas-separating means (3) comprises a third tubular element (3.21) of stainless steel with an upper end (3.211) fixed concentrically to a third fastening ring (3.22) of stainless steel, where the third tubular element (3.21) and the third fastening ring (3.22) are coated with an epoxy-vinyl ester resin.

6. -Device according to claim 5, wherein the permeable membrane segment (3.1) of the gas-separating means (3) is formed in the form of a cylindrical sleeve, and an upper end (3.11) of the permeable membrane segment (3.1) is fixed to a lower end (3.212) of the third tubular element (3.21) of the dielectric separating segment (3.2).

7. -Device according to claims 1 or 6, wherein the permeable membrane segment (3.1) of the gas-separating means (3) is made of a woven, porous, microperforated material, or its chemical composition is suitable to allow electrons to pass through it, selected from the group consisting of polypropylene, sulfonated copolymer-fluoropolymer based on tetrafluoroethylene, polyacrylonitrile, meta-aramid, polyamide, elastane, polyphenylene sulphide (PPS), polytetrafluoroethylene (PTFE) and fibreglass, or any combination thereof.

8. -Device according to claims 2, 3 and 5, wherein the first tubular element (2.1) has a larger diameter than the third tubular element (3.21) and the third tubular element (3.21) has a larger diameter than the second tubular element (4.1), so that the second tubular element (4.1) is configured to be disposed inside the third tubular element (3.21) of the dielectric separating segment (3.2) and the permeable membrane segment (3.1), with the second fastening ring (4.2 ) coupled onto the third fastening ring (3.22); and in turn, the third tubular element (3.21) of the dielectric separating segment (3.2) and the permeable membrane segment (3.1) are configured to be disposed inside the first tubular element (2.1), with the third fastening ring (3.22) coupled onto the first fastening ring (2.2); and in turn, the first tubular element (2.1) is configured to be disposed inside a container body (1.11) of the case (1.1), with the first fastening ring (2.2) coupled onto an upper flange (1.111) of the container body (1.11); and a lower flange (1.121) of a cover body (1.12) of the case (1.1) is configured to couple onto the second fastening ring (4.2).

9. -Device according to claim 8, wherein between the lower flange (1,121), the second fastening ring (4.2), the third fastening ring (3.22), the first fastening ring (2.2) and the upper flange (1,111) respective sealing gaskets (8) are disposed, and fixing means are configured to pass through the lower flange (1.121), the second fastening ring (4.2), the third fastening ring (3.22), the first fastening ring (2.2), the upper flange (1.111) and the sealing gaskets (8), and close the case (1.1) hermetically.

10. -Device according to claim 8, wherein the cover body (1.12) forms a cavity (7.1) that is part of the second gas accumulation chamber (7).

11. -Device according to claims 4 or 10, wherein a difference between the first and second level of water (N1, N2) contained in the hydrolysis chamber (5) corresponds to a difference in the accumulation of hydrogen gas and oxygen gas in the first and second gas accumulation chamber (6, 7) respectively.

12. -System for generating hydrogen gas and oxygen gas from water, **characterised in that** it comprises:
- at least one device (1) according to any of the preceding claims,
- a power supply, connected to a first voltage input port (2.3) of a cathode (2) and to a second voltage input port (4.3) of an anode (4) of electrode means of the device (1), and
- pressure storage means for hydrogen gas and oxygen gas comprising a hydrogen tank (11) and an oxygen tank (12) disposed downstream of a hydrogen gas pipe (1.2) and an oxygen gas pipe (1.3) of the device (1) respectively,
where, a first upper end (11.1) of the hydrogen tank (11) is connected to the hydrogen gas pipe (1.2) and a second upper end (12.1) of the oxygen tank (12) is connected to the oxygen gas pipe (1.3), and a first lower end (11.2) of the hydrogen tank (11) is connected to a second lower end (12.2) of the oxygen tank (12) by means of a first connection pipe (13), so that the hydrogen tank (11) and the oxygen tank (12) share an amount of water suitable for transferring from one of the tanks (11, 12) to the other, through the first connection pipe (13), and varying a storage volume of hydrogen gas (H) above a third level of water (N3) in the hydrogen tank (11) in relation to a storage volume of oxygen gas (O) above a fourth level of water (N4) in the oxygen tank (12), and vice versa, depending on a combination of actuations of respective solenoid valves (14) disposed in the hydrogen gas pipe (1.2), in the oxygen gas pipe (1.3) and in the first connection pipe (13) respectively.

13. -System according to claim 12, wherein the first upper end (11.1) of the hydrogen tank (11) comprises a hydrogen gas outlet pipe (15) and the second upper end (12.1) of the oxygen tank (12) comprises an oxygen gas outlet pipe (16), where the hydrogen gas and oxygen gas outlet pipes (15, 16) comprise respective solenoid valves (14).

14. -System according to claim 12, which comprises, between the device (1) and the oxygen tank (12), a heating loop (17) that is connected in parallel to the oxygen gas pipe (1.3), where, the heating loop (17) forms a coil (17.1) that surrounds the first lower end (11.2) of the hydrogen tank (11), the first connection pipe (13) and the second lower end (12.2) of the oxygen tank (12), and a solenoid valve (14) disposed in the heating loop (17) and a second solenoid valve (14) disposed in the oxygen gas pipe (1.3) regulate a diversion of the oxygen gas through the heating loop (17).

15. -System according to claim 12, including a set of devices (1) disposed in series.

## Amended claims

### Amended claims under Art. 19.1 PCT

1. -Device (1) for generating hydrogen gas and oxygen gas from water, comprising:
- a case (1.1) forming a hydrolysis chamber (5) designed to contain an amount of water,
- respective electrode means that act as a cathode (2) and as an anode (4), spaced apart and disposed in contact with the water contained in the hydrolysis chamber (5), so that, in use, the cathode (2) and the anode (4) are configured to dissociate the water contained in the hydrolysis chamber (5) in hydrogen gas and oxygen gas respectively,
- gas-separating means (3), designed to separate the hydrogen gas and the oxygen gas generated by the cathode (2) and the anode (4) in the hydrolysis chamber (5),
- a hydrogen gas pipe (1.2) and an oxygen gas pipe (1.3) in communication with the hydrolysis chamber (5), and
- a replacement water pipe (1.5), in communication with the hydrolysis chamber (5),
where, the gas-separating means (3) are disposed in the hydrolysis chamber (5) between the cathode (2) and the anode (4), and comprise a permeable membrane segment (3.1) suitable for preventing the generated hydrogen and oxygen gases from passing through said permeable membrane segment (3.1) and mixing together, so that the gas-separating means (3) divide the hydrolysis chamber (5) into a first chamber portion (5.1) that contains the cathode (2) and a second chamber portion (5.2) that contains the anode (4), where the first chamber portion (5.1) is in fluid communication with the hydrogen gas pipe (1.2) and the second chamber portion ( 5.2) is in fluid communication with the oxygen gas pipe (1.3),
**characterised in that** the gas-separating means (3) comprise a dielectric separating segment (3.2) fixed to the permeable membrane segment (3.1) and said permeable membrane segment (3.1) is open at its lower end (3.12), so that the dielectric separating segment (3.2) forms a first gas accumulation chamber (6) between a first level of water (N1) contained in the hydrolysis chamber (5) and the hydrogen gas pipe (1.2), and a second gas accumulation chamber (7) between a second level of water (N2) contained in the hydrolysis chamber (5) and the oxygen gas pipe (1.3), where, in use, a difference between the first and second level of water ( N1, N2) contained in the hydrolysis chamber (5) corresponds to a difference in the accumulation of hydrogen gas and oxygen gas in the first and second gas accumulation chamber (6, 7) respectively.

2. -Device according to claim 1, wherein the cathode (2) comprises a first tubular element (2.1) of stainless steel with a first upper end (2.11) fixed concentrically to a first fastening ring (2.2) of stainless steel, where, the first upper end (2.11) of the first tubular element (2.1) comprises at least a first through hole (2.12), and a first voltage input port (2.3) is fixed to the first fastening ring (2.2).

3. -Device according to claim 1, wherein the anode (4) comprises a second tubular element (4.1) of stainless steel with a second upper end (4.11) fixed concentrically to a second fastening ring (4.2) of stainless steel, where, the second upper end (4.11) of the second tubular element (4.1) comprises at least a second through hole (4.12), and a second voltage input port (4.3) is fixed to the second fastening ring (4.2).

4. -Device according to claim 1, wherein the dielectric separating segment (3.2) of the gas-separating means (3) comprises a third tubular element (3.21) of stainless steel with an upper end (3.211) fixed concentrically to a third fastening ring (3.22) of stainless steel, where the third tubular element (3.21) and the third fastening ring (3.22) are coated with an epoxy-vinyl ester resin.

5. -Device according to claim 4, wherein the permeable membrane segment (3.1) of the gas-separating means (3) is formed in the form of a cylindrical sleeve, and an upper end (3.11) of the permeable membrane segment (3.1) is fixed to a lower end (3.212) of the third tubular element (3.21) of the dielectric separating segment (3.2).

6. -Device according to claims 1 or 5, wherein the permeable membrane segment (3.1) of the gas-separating means (3) is made of a woven, porous, microperforated material, or its chemical composition is suitable to allow electrons to pass through it, selected from the group consisting of polypropylene, sulfonated copolymer-fluoropolymer based on tetrafluoroethylene, polyacrylonitrile, meta-aramid, polyamide, elastane, polyphenylene sulphide (PPS), polytetrafluoroethylene (PTFE) and fibreglass, or any combination thereof.

7. -Device according to claims 2, 3 and 4, wherein the first tubular element (2.1) has a larger diameter than the third tubular element (3.21) and the third tubular element (3.21) has a larger diameter than the second tubular element (4.1), so that the second tubular element (4.1) is configured to be disposed inside the third tubular element (3.21) of the dielectric separating segment (3.2) and the permeable membrane segment (3.1), with the second fastening ring (4.2 ) coupled onto the third fastening ring (3.22); and in turn, the third tubular element (3.21) of the dielectric separating segment (3.2) and the permeable membrane segment (3.1) are configured to be disposed inside the first tubular element (2.1), with the third fastening ring (3.22) coupled onto the first fastening ring (2.2); and in turn, the first tubular element (2.1) is configured to be disposed inside a container body (1.11) of the case (1.1), with the first fastening ring (2.2) coupled onto an upper flange (1.111) of the container body (1.11); and a lower flange (1.121) of a cover body (1.12) of the case (1.1) is configured to couple onto the second fastening ring (4.2).

8. -Device according to claim 7, wherein between the lower flange (1,121), the second fastening ring (4.2), the third fastening ring (3.22), the first fastening ring (2.2) and the upper flange (1,111) respective sealing gaskets (8) are disposed, and fixing means are configured to pass through the lower flange (1.121), the second fastening ring (4.2), the third fastening ring (3.22), the first fastening ring (2.2), the upper flange (1.111) and the sealing gaskets (8), and close the case (1.1) hermetically.

9. -Device according to claim 7, wherein the cover body (1.12) forms a cavity (7.1) that is part of the second gas accumulation chamber (7).

10. -System for generating hydrogen gas and oxygen gas from water, **characterised in that** it comprises:
- at least one device (1) according to any of the preceding claims,
- a power supply, connected to a first voltage input port (2.3) of a cathode (2) and to a second voltage input port (4.3) of an anode (4) of electrode means of the device (1), and
- pressure storage means for hydrogen gas and oxygen gas comprising a hydrogen tank (11) and an oxygen tank (12) disposed downstream of a hydrogen gas pipe (1.2) and an oxygen gas pipe (1.3) of the device (1) respectively,
where, a first upper end (11.1) of the hydrogen tank (11) is connected to the hydrogen gas pipe (1.2) and a second upper end (12.1) of the oxygen tank (12) is connected to the oxygen gas pipe (1.3), and a first lower end (11.2) of the hydrogen tank (11) is connected to a second lower end (12.2) of the oxygen tank (12) by means of a first connection pipe (13), so that the hydrogen tank (11) and the oxygen tank (12) share an amount of water suitable for transferring from one of the tanks (11, 12) to the other, through the first connection pipe (13), and varying a storage volume of hydrogen gas (H) above a third level of water (N3) in the hydrogen tank (11) in relation to a storage volume of oxygen gas (O) above a fourth level of water (N4) in the oxygen tank (12), and vice versa, depending on a combination of actuations of respective solenoid valves (14) disposed in the hydrogen gas pipe (1.2), in the oxygen gas pipe (1.3) and in the first connection pipe (13) respectively.

11. -System according to claim 10, wherein the first upper end (11.1) of the hydrogen tank (11) comprises a hydrogen gas outlet pipe (15) and the second upper end (12.1) of the oxygen tank (12) comprises an oxygen gas outlet pipe (16), where the hydrogen gas and oxygen gas outlet pipes (15, 16) comprise respective solenoid valves (14).

12. -System according to claim 10, which comprises, between the device (1) and the oxygen tank (12), a heating loop (17) that is connected in parallel to the oxygen gas pipe (1.3), where, the heating loop (17) forms a coil (17.1) that surrounds the first lower end (11.2) of the hydrogen tank (11), the first connection pipe (13) and the second lower end (12.2) of the oxygen tank (12), and a solenoid valve (14) disposed in the heating loop (17) and a second solenoid valve (14) disposed in the oxygen gas pipe (1.3) regulate a diversion of the oxygen gas through the heating loop (17).

13. -System according to claim 10, including a set of devices (1) disposed in series.
